# EUROPEAN PATENT SPECIFICATION

(11) **EP 4 391 673 B1**
(45) Date of publication and mention of the grant of the patent: **10.09.2025**
(21) Application number: 21957851.5
(22) Date of filing: 24.09.2021
(51) Int. Cl.: H04W 72/02, H04W 74/00, H04W 72/56

(54) **CHANNEL ACCESS METHOD, AND DEVICE AND STORAGE MEDIUM**
KANALZUGRIFFSVERFAHREN SOWIE VORRICHTUNG UND SPEICHERMEDIUM
PROCÉDÉ D'ACCÈS À UN CANAL, AINSI QUE DISPOSITIF ET SUPPORT DE STOCKAGE

(43) Date of publication of application: 26.06.2024
(73) Proprietor: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); ZHANG, Shichang, Dongguan, Guangdong 523860 (CN); MA, Teng, Dongguan, Guangdong 523860 (CN)
(74) Representative: Penza, Giancarlo
(86) International application number: PCT/CN2021/120173
(87) International publication number: WO 2023/044716

(56) References cited:
- EP-A1- 3 843 475
- WO-A1-2021/212354
- WO-A1-2022/046441
- CN-A- 110 891 314
- CN-A- 114 051 747
- US-A1- 2021 092 783
- US-A1- 2021 298 070

## Description

### TECHNICAL FIELD

The invention relates to a method for channel access for a first device, a method for channel access for a second device, a first device, a second device and computer storage media.

### BACKGROUND

New radio (NR) vehicle to everything (V2X) communication is a technology based on sidelink (SL) transmission. Different from a conventional cellular system in which communication data is received or sent by a base station, in the NR V2X communication, terminals communicate with each other directly through SL, thus providing a higher spectrum efficiency and a lower transmission delay.

The system for direct communication between terminals is also called a sidelink transmission system. When the sidelink transmission system works on an unlicensed spectrum, the terminals in the sidelink transmission system need to use the unlicensed spectrum through a "listen before talk" (LBT) mode. How to access a channel by the terminal in this mode is an urgent problem to be solved at present.

EP 3843475A1 discloses a communication method to solve the problem of sending data between terminals on unlicensed spectrum resource.

US 2021/092783A1 discloses methods related to channel occupancy time (COT) sharing among sidelink user equipment devices.

### SUMMARY

The invention is set out in the appended set of claims. Embodiments of the disclosure provide a method for channel access for a first device, a method for channel access for a second device, a first device, a second device and computer storage media.

In a first aspect, there is provided a method for channel access according to claim 1 in an embodiment of the disclosure. Optional features are set out in dependent claims 2 to 4.

In a second aspect, there is provided a method for channel access according to claim 5 in an embodiment of the disclosure. Optional features are set out in dependent claims 6 to 8.

In a third aspect, there is provided a first device according to claim 9 in an embodiment of the disclosure.

In a fourth aspect, there is provided a second device according to claim 10 in an embodiment of the disclosure.

In a fifth aspect, there is provided a computer storage medium according to claim 11 in an embodiment of the disclosure.

In a sixth aspect, there is provided a computer storage medium in an embodiment of the disclosure according to claim 12.

The embodiments of the disclosure provide a method for channel access, a device and a storage medium, which may be applied to a sidelink communication system. The method includes the following operations. A sidelink device determines a channel access priority based on a sidelink priority or sidelink resource configuration information and performs the channel access based on one or more channel access parameters corresponding to the determined channel access priority, such that the success rate of channel access by the sidelink device can be improved. The sidelink device may further determine a shared channel occupancy time based on the sidelink priority or the sidelink resource configuration information, and send, to an opposite device, indication information for indicating the shared channel occupancy time, such that a second device may determine a channel access type based on the indication information. Therefore, the success rate of channel access by the opposite device can be improved.

### BRIEF DESCRIPTION OF THE DRAWINGS

FIG. 1 is a first schematic diagram of an application scenario provided in an embodiment of the disclosure.
FIG. 2 is a second schematic diagram of an application scenario provided in an embodiment of the disclosure.
FIG. 3 is a third schematic diagram of an application scenario provided in an embodiment of the disclosure.
FIG. 4 is a fourth schematic diagram of an application scenario provided in an embodiment of the disclosure.
FIG. 5 is a first schematic diagram of a slot structure of sidelink communication provided in an embodiment of the disclosure.
FIG. 6 is a second schematic diagram of a slot structure of sidelink communication provided in an embodiment of the disclosure.
FIG. 7 is a schematic diagram of a physical sidelink feedback channel (PSFCH) resource provided in an embodiment of the disclosure.
FIG. 8 is a first schematic flowchart of a method for channel access provided in an embodiment of the disclosure.
FIG. 9 is a second schematic flowchart of a method for channel access provided in an embodiment of the disclosure.
FIG. 10 is a schematic diagram of sidelink resource configuration provided in an embodiment of the disclosure.
FIG. 11 is a schematic diagram of interaction of a method for channel access provided in an embodiment of the disclosure.
FIG. 12 is a first schematic diagram of a structure of a first device provided in an embodiment of the disclosure.
FIG. 13 is a second schematic diagram of a structure of a first device provided in an embodiment of the disclosure.
FIG. 14 is a schematic diagram of a structure of a second device provided in an embodiment of the disclosure.
FIG. 15 is a schematic diagram of a hardware structure of a first device provided in an embodiment of the disclosure.
FIG. 16 is a schematic diagram of a hardware structure of a second device provided in an embodiment of the disclosure.

### DETAILED DESCRIPTION

Technical solutions of the present disclosure will be described below with reference to the accompanying drawings.

The information transmission method provided by the present disclosure may be applied to various communication systems, such as, a long term evolution (LTE) system, an LTE frequency division duplex (FDD) system, an LTE time division duplex (TDD) system, a universal mobile telecommunications system (UMTS), a worldwide interoperability for microwave access (WiMAX) communication system, a 5th generation (5G) mobile communication system or an NR access technology. The 5G mobile communication system may include a non-standalone (NSA) system and/or a standalone (SA) system.

The information transmission method provided by the present disclosure may also be applied to a machine type communication (MTC), an LTE-machine (LTE-M), a device to device (D2D) network, a machine to machine (M2M) network, an Internet of things (IoT) network or other networks. The IoT network may include, for example, the Internet of vehicles. Communication modes in the Internet of vehicles system are collectively referred to as vehicle to X (V2X, X may represent anything). For example, the V2X may include a vehicle to vehicle (V2V) communication, vehicle to infrastructure (V2I) communication, vehicle to pedestrian (V2P) communication or vehicle to network (V2N) communication, etc.

The information transmission method provided by the present disclosure may also be applied to a future communication system, such as a sixth generation mobile communication system and the like. This disclosure is not limited thereto.

In the embodiments of the disclosure, the terminal device may be referred to as user equipment (UE), an access terminal, a subscriber unit, a subscriber station, a mobile station, a mobile radio station, a remote station, a remote terminal, a mobile device, a user terminal, a terminal, a wireless communication device, a user agent, or a user device.

The terminal device may be a device that provides voice/data connectivity to a user. For example, the terminal device may be a handheld device having a wireless connection function, an on-board device and the like. At present, some examples of the terminal may be: a mobile phone, a pad, a computer with a wireless transceiver function (such as a laptop, a palmtop, etc.), a mobile Internet device (MID), a virtual reality (VR) device, an augmented reality (AR) device, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, a cellular telephone, a cordless telephone, a session initiation protocol (SIP) telephone, a wireless local loop (WLL) station, a personal digital assistant (PDA), a handheld device with a wireless communication function, a computing device or other processing devices connected to a wireless modem, an on-board device, a wearable device, a terminal device in a 5G network or a terminal device in a future evolved public land mobile network (PLMN), etc.

The wearable device may also be referred to as a wearable intelligent device, and is a generic term of wearable devices obtained by performing intelligent design and development on daily wearing products by using the wearable technology, such as glasses, gloves, watches, clothes, and shoes. The wearable device is a portable device directly worn or integrated to clothes or accessory of a user. The wearable device not only is a hardware device but also realizes powerful functions by software support, data interaction, and cloud interaction. Generalized wearable intelligent devices include full-featured, large size and complete or partial functions realized without relying on smart phones, such as smart watches or smart glasses, and includes only a certain application function, which is necessary to be used in conjunction with other devices such as a smart phone, such as various smart bracelets and smart jewelry for monitoring physical signs.

In addition, the terminal device may also be a terminal device in an IoT system. The IoT is an important part of development of future information technology. The main technical characteristic of the IoT is to connect things with the network through a communication technology, so as to realize an intelligent network of human-machine interconnection and thing-thing interconnection. The IoT technology may achieve massive connections, deep coverage and terminal power saving through, for example, a narrow band (NB) technology.

In addition, the terminal device may also include an intelligent printer, a train detector, a gas station and other sensors. The main functions of these kinds of devices include collecting data (some of the terminal devices), receiving control information and downlink data from a network device, sending electromagnetic waves and transmitting uplink data to the network device.

In the embodiments of the disclosure, the network device may be any device with a wireless transceiver function. The network device includes but is not limited to, an evolved Node B (eNB), a radio network controller (RNC), a Node B (NB), a base station controller (BSC), a base transceiver station (BTS), a home evolved NodeB or home Node B (HNB), a baseband unit (BBU), an access point (AP) in a wireless fidelity (WiFi) system, a wireless relay node, a wireless backhaul node, a transmission point (TP) or a transmission and reception point (TRP) and so on, and may also be a gNB or TRP or TP in the 5G such as NR system, one antenna panel or a group of antenna panels (including a plurality of antenna panels) of a base station in the 5G system, or a network node constituting the gNB or the TP, such as a baseband unit (BBU), or a distributed unit (DU), etc.

In some deployments, the gNB may include a centralized unit (CU) and a DU. The gNB may also include an active antenna unit (AAU). The CU implements some of the functions of the gNB, and the DU implements some of the functions of the gNB. For example, the CU may handle non-real-time protocols and services. For example, the CU may implement functions of a radio resource control (RRC) layer, a service data adaptation protocol (SDAP) layer and/or a packet data convergence protocol (PDCP) layer. The DU may handle a physical (PHY) layer protocol and real-time services. For example, the DU may implement functions of a radio link control (RLC) layer, a media access control (MAC) layer, and a PHY layer. A DU may be connected to only one CU or multiple CUs, while a CU may be connected to multiple DUs, and may be perform communication the communication with DUs through an F1 interface. The AAU may realize some processing functions of the PHY layer, RF processing and active antenna related functions. Since information of the RRC layer will eventually be delivered to the PHY layer and become information of the PHY layer, or is transformed from the information of the PHY layer. Therefore, under this architecture, high-level signaling such as RRC layer signaling may also be considered as being sent by the DU or by the DU + AAU.

It is understood that the network device may be a device including one or more of a CU node, a DU node, and an AAU node. Further, the CU may be a network device in a radio access network (RAN) or network device in a core network (CN), which is not limited herein.

The network device provides services for a cell, and the terminal device communicates with the cell through transmission resources (e.g., frequency domain resources or called spectrum resources) configured by the network device. The cell may belong to a macro base station (e.g., a macro eNB or macro gNB, etc.) or a base station corresponding to a small cell. The small cell may include a metro cell, a micro cell, a pico cell, a femto cell, etc. These small cells have the characteristics of small coverage, low transmission power and the like, and are suitable for providing high-speed data transmission services.

The following explanations are described to facilitate understanding of the embodiments of the present disclosure.

In the embodiments of the present disclosure, terms "system" and "network" herein may be used interchangeably generally. The term "and/or" is only an association relationship for describing the associated objects, and represents there are three relationships. For example, A and/or B may represent the following three cases: independent existence of A, existence of both A and B and independent existence of B. In addition, character "/" in the disclosure usually represents that previous and next associated objects form an "or" relationship.

Terms used in the description of this disclosure are used only for explanation of specific embodiments of this disclosure and are not intended to limit the disclosure. The terms "first", "second", "third", "fourth" and the like in the specification, claims and drawings of the disclosure are adopted not to describe a specific sequence but to distinguish different objects. In addition, terms "include" and "have" and any variations thereof are intended to cover nonexclusive inclusions.

The term "indication" in embodiments of the present disclosure may be a direct indication, an indirect indication, or an indication of an associative relationship. For example, an indication of B by A may indicate that A directly indicates B, for example, B is obtained through A, or that A indirectly indicates B, for example, A indicates C and B is obtained through C, or that there is an association between A and B.

The term "correspondence" in embodiments of the present disclosure may indicate a direct or indirect correspondence between the two elements, or may indicate an association between the two elements, or may indicate a relationship of indicating and being indicated, configuring and being configured, etc.

The term "predefined" or "preconfigured" in embodiments of the present disclosure may be achieved by pre-storing corresponding codes, tables or other manners for indicating relevant information in devices (e.g., including a terminal device and a network device). The specific implementation is not limited in the present disclosure. For example, "predefined" may refer to those defined in a protocol.

In the embodiments of the disclosure, "protocol" may refer to a standard protocol in the field of communication, which may include, for example, a LTE protocol, NR protocol and relevant protocol applied in the future communication system, which is not limited in the present disclosure

In order to facilitate the understanding of the embodiments of the present disclosure, application scenarios of the embodiments of the present disclosure are described firstly.

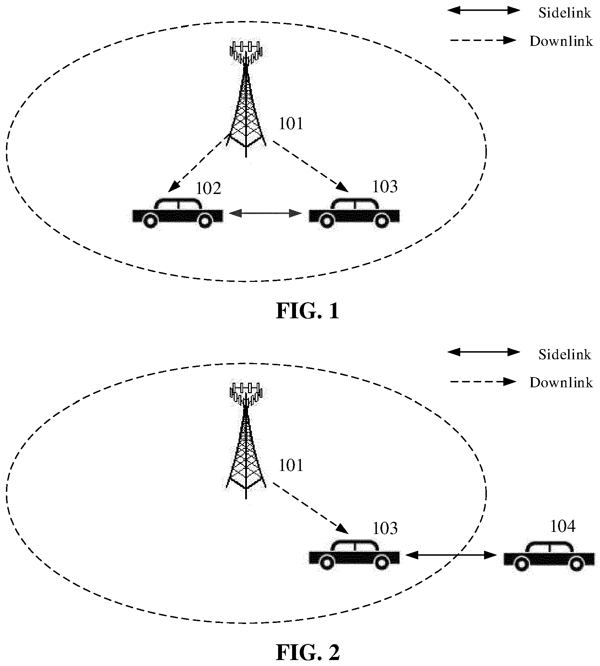

FIG. 1 is a first schematic diagram of an application scenario provided in an embodiment of the disclosure. The scenario illustrated in FIG. 1 includes a network device 101 and two terminal devices, i.e., a terminal device 102 and a terminal device 103 respectively. Both of the terminal device 102 and the terminal device 103 are located within a coverage of the network device 101. The network device 101 is in a communication connection with the terminal device 102 and the terminal device 103, respectively, and the terminal device 102 is in a communication connection with the terminal device 103. Exemplarily, the terminal device 102 may send a communication message to the terminal device 103 through the network device 101, and the terminal device 102 may also send a communication message directly to the terminal device 103. A link for direct communication between the terminal device 102 and the terminal device 103 is referred to as a D2D link and may also be referred to as a proximity service (ProSe) link, a sidelink and the like. Transmission resources on the D2D link may be allocated by the network device.

FIG. 2 is a second schematic diagram of an application scenario provided in an embodiment of the disclosure. The scenario illustrated in FIG. 2 also includes one network device 101 and two terminal devices. Unlike FIG. 1, the terminal device 103 is within the coverage of the network device 101 and the terminal device 104 is outside the coverage of the network device 101. The network device 101 is in a communication connection with the terminal device 103 and the terminal device 103 is in a communication connection with the terminal device 104. Exemplarily, the terminal device 103 may receive configuration information from the network device 101 and perform sidelink communication based on the configuration information. Since the terminal device 104 cannot receive the configuration information from the network device 101, the terminal device 104 may perform sidelink communication based on pre-configured information and information carried in a physical sidelink broadcast channel (PSBCH) transmitted by the terminal device 103.

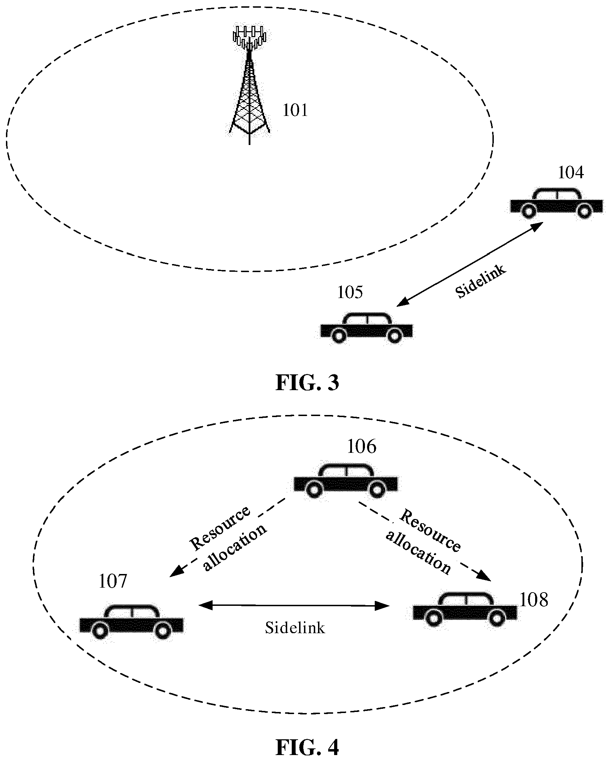

FIG. 3 is a third schematic diagram of an application scenario provided in an embodiment of the disclosure. In the scenario illustrated in FIG. 3, both the terminal device 104 and a terminal device 105 are located outside the coverage of the network device 101. Both the terminal device 104 and the terminal device 105 may determine sidelink configuration based on pre-configured information and perform sidelink communication.

FIG. 4 is a fourth schematic diagram of an application scenario provided in an embodiment of the disclosure. In the scenario illustrated in FIG. 4, a plurality of terminal devices form a communication group, for example, terminal devices 106, 107 and 108 form a communication group. There is a central control node within the communication group, which may also be referred to as a cluster header (CH), such as a terminal device 106. The central control node has one of the following functions: responsible for establishment of a communication group; joining and leaving of a group member; performing resource coordination, allocating sidelink transmission resources for other terminals and receiving sidelink feedback information from other terminals; and performing resource coordination with other communication groups and the like.

It is to be noted that the system architecture and application scenario described in the embodiments of the present disclosure are for clear illustration of the technical solutions of the embodiments of the present disclosure, and should be not construed as limitation of the technical solutions provided in the embodiments of the present disclosure. Those skilled in the art should understand that the technical solutions provided in the embodiments of the present disclosure may also be applied for similar technical problems appeared with evolution of network architectures and emergence of new service scenarios.

D2D communication has a higher frequency efficiency and lower transmission delay than the traditional cellular systems in which communication data is received or transmitted through the base station. The Internet of Vehicles system adopts a terminal-to-terminal direct communication, and two transmission modes are defined in the 3rd Generation Partnership Project (3GPP): a first transmission mode and a second transmission mode.

In the first transmission mode, transmission resources of the terminal device are allocated by the base station, and the terminal device performs data transmission on a sidelink based on the resources allocated by the base station. The base station may allocate a resource to the terminal device for a single transmission, and may also allocate a resource to the terminal device for a semi-static transmission.

Exemplarily, the terminal device 102 illustrated in FIG. 1 is located within the coverage of the network device 101, and the network device 101 allocates transmission resources to the terminal device 102 for sidelink transmission.

In the second transmission mode, the terminal device selects a resource in a resource pool for data transmission.

Exemplarily, the terminal device 102 illustrated in FIG. 1 may autonomously select a transmission resource for sidelink transmission from a resource pool configured by the network. The terminal device 104 and the terminal device 105 illustrated in FIG. 3 are both located outside the coverage of the network device 101, and the terminal device 104 and the terminal device 105 may autonomously select transmission resources for the sidelink transmission from the pre-configured resource pool.

NR-V2X is a communication scenario based on the sidelink. In NR-V2X communication, X may generally refer to any device with wireless reception and transmission capabilities, which includes but is not limited to a slow-moving wireless device, a fast-moving on-board device, a network control node with the wireless reception and transmission capabilities, etc.

The NR-V2X communication supports transmission modes of unicast, multicast and broadcast. In the unicast transmission, a transmitting terminal transmits data, and there is only one receiving terminal. In the multicast transmission, the transmitting terminal transmits data, and the receiving terminals are all terminals in a communication group or all terminals within a certain transmission distance. In the broadcast transmission, the transmitting terminal transmits data, and the receiving terminal is any terminal around the transmitting terminal.

The NR-V2X communication needs to support automatic driving, which put forwards higher requirements for data interaction between vehicles, such as a higher throughput, lower delay, higher reliability, larger coverage and more flexible resource allocation. In order to improve the reliability of communication, a physical sidelink feedback channel (PSFCH) is introduced into NR-V2X.

In the unicast transmission, the transmitting terminal transmits sidelink data (including a physical sidelink control channel (PSCCH) and a physical sidelink shared channel (PSSCH)) to the receiving terminal. The receiving terminal transmits feedback information of hybrid automatic repeat request (HARQ) to the transmitting terminal, and the transmitting terminal determines whether data retransmission is required based on the feedback information from the receiving terminal. The feedback information of the HARQ is carried in the PSFCH.

In the multicast transmission, the following two sidelink feedback modes are supported.

In the first mode, a terminal within a certain distance range receives sidelink data from a transmitting terminal, and if a detection result is NACK (non-acknowledgement), the terminal needs to send sidelink feedback; if the detection result is ACK (acknowledgement), the terminal does not need to send sidelink feedback. A terminal outside the distance range does not need to send sidelink feedback regardless of the detection result.

In the second mode, all receiving terminals in a communication group need to send sidelink feedback. For example, a communication group includes P terminals, and when a terminal, as a transmitting terminal, transmits sidelink data, the other P-1 terminals need to transmit sidelink feedback information.

Sidelink feedback may be activated or deactivated by pre-configured information, network-configured information, or the transmitting terminal. If the sidelink feedback is activated, the receiving terminal receives the sidelink data from the transmitting terminal and needs to feedback HARQ ACK/NACK to the transmitting terminal based on the detection result. The transmitting terminal determines to transmit retransmission data or new data based on the feedback information from the receiving terminal. If the sidelink feedback is deactivated, the receiving terminal does not need to transmit feedback information, and the transmitting terminal generally transmits data by means of blind retransmission, for example, the transmitting terminal repeatedly transmits each sidelink data for a preset number of retransmissions.

A slot structure in the NR-V2X communication is illustrated below.

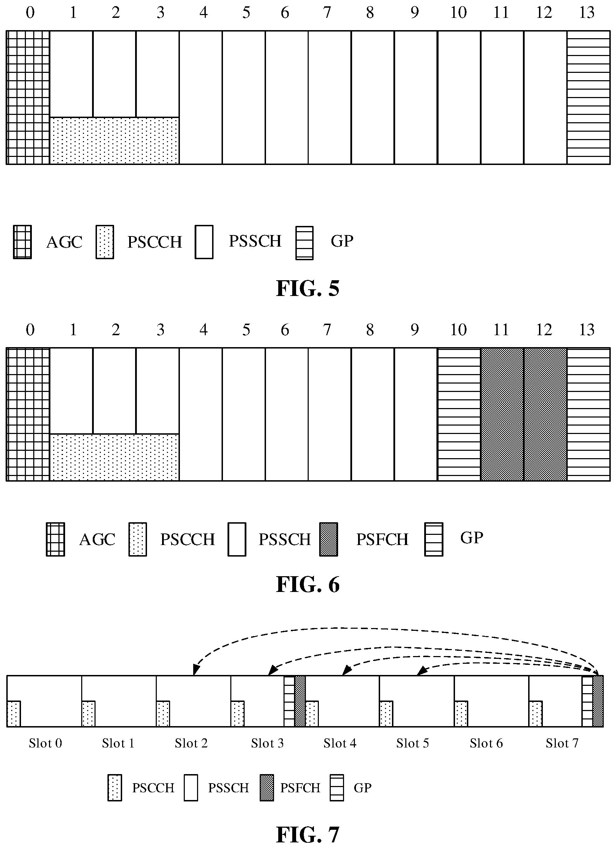

FIG. 5 is a first schematic diagram of a slot structure of sidelink communication provided in an embodiment of the disclosure. The slot illustrated in FIG. 5 includes no symbol of a PSFCH. The first sidelink symbol of the slot is typically used as automatic gain control (AGC). The terminal device duplicates data transmitted on the second symbol onto the AGC symbol, and the data on the AGC symbol is typically not used for data demodulation. The last sidelink symbol of the slot is a guard period (GP), which is used for transmitting-receiving transition, particularly, for the terminal device to transform from a transmitting (or receiving) state to a receiving (or transmitting) state. Among the remaining sidelink symbols of the slot, a PSCCH may occupy two or three orthogonal frequency division multiplexing (OFDM) symbols starting from the second sidelink symbol, and the PSCCH may occupy {10, 12, 15, 20, 25} physical resource blocks (PRBs) in the frequency domain. In order to reduce the complexity of blind detection on the PSCCH by the terminal device, the symbol number and PRB number of one PSCCH is allowed to be configured in a resource pool. In addition, because the minimum granularity of resource allocation for a PSSCH in NR-V2X is a sub-channel, the number of PRBs occupied by the PSCCH needs to be less than or equal to the number of PRBs contained in a sub-channel in the resource pool, so as to avoid additional restrictions on PSSCH resource selection or allocation. A PSSCH may occupy symbols starting from the second sidelink symbol of the slot to the symbol prior to the last GP symbol of the slot. The PSSCH occupies K sub-channels in the frequency domain, and each of sub-channels includes M continuous PRBs, where K is a positive integer and a value of M may be {10, 12, 15, 20, 25, 50, 75, 100}.

FIG. 6 is a second schematic diagram of a slot structure of sidelink communication provided in an embodiment of the disclosure. In the slot structure illustrated in FIG. 6, the last symbol is used as a GP, the second to last symbol is used for PSFCH transmission, data on the third to last symbol is the same as data on the PSFCH symbol and is used as the AGC, the fourth to last symbol is also used as a GP. The first symbol in the slot is used as the AGC, data on the first symbol is the same as data on the second time-domain symbol in the slot, the PSCCH occupies three time-domain symbols, and the remaining symbols may be used for PSSCH transmission.

In order to reduce the overhead of the PSFCH channel, a period of a sidelink feedback resource may be defined, for example, defined as N slots, N may be 1, 2, 4, etc. The parameter N may be pre-configured or be configured by the network.

FIG. 7 is a schematic diagram of a PSFCH resource provided in an embodiment of the disclosure. As illustrated in FIG. 7, a period of a PSFCH is four slots. Feedback information of PSSCHs transmitted in slots 2, 3, 4 and 5 is transmitted in slot 7, thus the slots 2, 3, 4 and 5 may be regarded as a slot set, and the PSFCH corresponding to the PSSCHs transmitted in the slot set is located in the same slot (i.e., slot 7). A minimum time interval between a PSSCH and a PSFCH corresponding to the PSSCH may be configured by resource pool configuration information, and the minimum time interval between the PSSCH and the PSFCH corresponding to the PSSCH may be two slots, as illustrated in FIG. 7.

The NR system is a communication system used in existing and new licensed frequencies, which can achieve seamless coverage, high spectrum efficiency, high peak rate and high reliability of cellular networks. In the LTE system, the unlicensed spectrum has been used as a supplementary spectrum to the licensed spectrum in cellular networks. Similarly, the NR system may also use the unlicensed spectrum as a part of 5G cellular network technology to provide services for users.

The unlicensed spectrum is a spectrum determined by countries and regions and may be used for radio device communication. The spectrum is usually considered as a shared spectrum, that is, communication devices in different communication systems may use the spectrum as long as they meet regulatory requirements set by countries or regions on this spectrum, and do not need to apply for a proprietary spectrum authorization from a government. Therefore, the unlicensed spectrum is also called the shared spectrum.

In order to allow various communication systems that use the unlicensed spectrum for wireless communication to coexist friendly in the spectrum, some countries or regions specify regulatory requirements that must be met to use the unlicensed spectrum. For example, a communication device follows a listen before talk (LBT), that is, the communication device needs to perform a channel sensing before transmitting a signal on a channel in the unlicensed spectrum. When the result of the channel sensing illustrates that the channel is idle, the communication device can access the channel and perform signal transmission. When the result of the channel sensing on a channel in the unlicensed spectrum by the communication device illustrates that the channel is busy, the communication device cannot perform signal transmission. In order to ensure fairness, for one transmission, a duration for which the communication device performs signal transmission using a channel in the unlicensed spectrum cannot exceed a maximum channel occupancy time (MCOT).

Basic concepts of the channel transmission on the unlicensed spectrum are briefly described as follows.
1. MCOT: a maximum duration allowed to use a channel of the unlicensed spectrum for signal transmission after the LBT is successful. Different channel access priorities correspond to different MCOTs. The current maximum value of the MCOT is 10 ms (milliseconds). It should be understood that the MCOT is a duration occupied by the signal transmission.
2. Channel occupancy time (COT): a duration for using the channel of the unlicensed spectrum for signal transmission after the LBT is successful. The channel occupation by the signal within the duration may be discontinuous. A COT may not exceed 20 ms at most, and the duration occupied by the signal transmission in the COT does not exceed the MCOT.
3. COT of a network device such as a base station (gNB-initiated COT): also known as a COT initiated by the network device, which is a time for occupying the channel once by the network device obtained after the LBT by the network device is successful. The COT of the network device may be used not only for downlink transmission, but also for UE to perform uplink transmission under a certain condition.
4. COT of UE (UE-initiated COT): also known as a COT initiated by the UE, which is a time for occupying the channel once by the UE obtained after the LBT by the UE is successful.
5. Downlink transmission opportunity (DL burst): a group of downlink transmissions (including one or more downlink transmissions) performed by the network device. The group of downlink transmissions is continuous transmissions (that is, there is no gap between multiple downlink transmissions), or there is a gap in the group of downlink transmissions but the gap is less than or equal to 16 µs. If the gap between two downlink transmissions performed by the network device is greater than 16 µs, the two downlink transmissions are considered to be two DL bursts.
6. Uplink transmission opportunity (UL burst): a group of uplink transmissions (including one or more uplink transmissions) performed by the UE. The group of uplink transmissions is continuous transmissions (that is, there is no gap between multiple uplink transmissions), or there is a gap in the group of uplink transmissions but the gap is less than or equal to 16 µs. If the gap between two uplink transmissions performed by the UE is greater than 16 µs, the two uplink transmissions are considered to be two UL bursts.

In the NR-U system, there are several channel access types, also known as LBT types.
1. First channel access type, i.e., channel access type type1: channel detection on multi-slots with random fallback based on contention window size adjustment. Channel occupancy with a duration Tmcot may be initiated based on a channel access priority p. The base station using the channel access type type1 may send data of its own and also share the COT with the UE. The UE using the channel access type type1 may send data of its own and also share the COT with the base station. Table 1 shows a correspondence between a channel access priority and a channel access parameter(s) when a terminal performs the channel access with the channel access type type1.

**Table 1**

| Channel access priority (p) | mₚ | CW_{min,p} | CW_{min,p} | T_{mcot,p} | Allowable CWₚ value |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

It should be noted that in the above Table 1, mₚ is the number of backoff slots corresponding to channel access priority p; CWₚ is a contention window size corresponding to channel access priority p; CW_{min,p} is a minimum value of CWₚ corresponding to channel access priority p; CW_{max,p} is a maximum value of CWₚ corresponding to channel access priority p; and T_{mcot,p} is a maximum channel occupancy time length (or called maximum channel occupancy time) corresponding to channel access priority p.

In four channel access priorities of the first channel access type in NR-U, p=1 is the highest priority.

2. Second channel access type, i.e., channel access type type2: a channel access mode based on a channel sensing slot with a fixed length, specifically including the following three modes.

Channel access type type2A: a single-slot channel detection with a fixed length (or fixed duration) of 25 us (microsecond), that is, the channel detection is started at 25 us before data transmission. The channel detection includes a detection of 16 us and a detection of 9 us, if the channel is idle in both detections, the channel is determined as being idle and channel access may be performed.

Channel access type type2B: a single-slot channel detection with a fixed length (or fixed duration) of 16 us. The channel may be determined as being idle if the channel is idle for more than 4 us in the last 9 us of the detection.

Channel access type type2C: the transmission is performed directly without channel detection. Because a time difference between the present transmission and the previous transmission is less than 16 us, the present transmission and the previous transmission may be considered as a same transmission, but a duration of the present transmission does not exceed 584 us.

There may be devices of various communication systems on the unlicensed spectrum, and spectrum resources are shared among the devices. Therefore, a terminal needs to perform LBT on the unlicensed spectrum when the terminal needs to perform transmission. If the LBT is successful, the terminal may transmit data by using the unlicensed spectrum, otherwise, the terminal needs to postpone data transmission until the LBT is successful.

A terminal in a sidelink transmission system needs to determine whether an unlicensed spectrum can be used for transmission by using LBT when the sidelink transmission system works on the unlicensed spectrum. Therefore, how the terminal accesses the channel by using the first channel access type is an urgent problem to be solved at present.

To solve the above problems, the embodiments of the disclosure provide a method for channel access. A correspondence between a sidelink priority and a channel access priority of the first channel access mode is configured, the sidelink device determines a channel access priority corresponding to a current sidelink priority based on the configuration after the sidelink device obtains the current sidelink priority. Alternatively, the sidelink device determines the channel access priority based on the sidelink resource configuration, and then perform the channel access on the unlicensed spectrum based on a channel access parameter(s) corresponding to the channel access priority. The above method for channel access can improve the success rate of channel access by the sidelink device.

The sidelink device may determine a shared channel occupancy time based on the sidelink priority and the channel access priority after successfully accessing the channel according to the above manner, and may send, to an opposite device, indication information for indicating the shared channel occupancy time. The sidelink device may also determine a maximum shared channel occupancy time based on sidelink resource configuration, and may send indication information to the opposite device, such that the opposite device may access the channel through the second channel access type. Therefore, the success rate of channel access by the opposite device can be improved.

The technical solutions provided in the embodiments of the present disclosure will be described below in detail by specific embodiments. It should be noted that the technical solutions provided in the embodiments of the present disclosure may include some or all of the following contents. The following specific embodiments may be combined with each other, and the same or similar concepts or processes may not be elaborated in some embodiments.

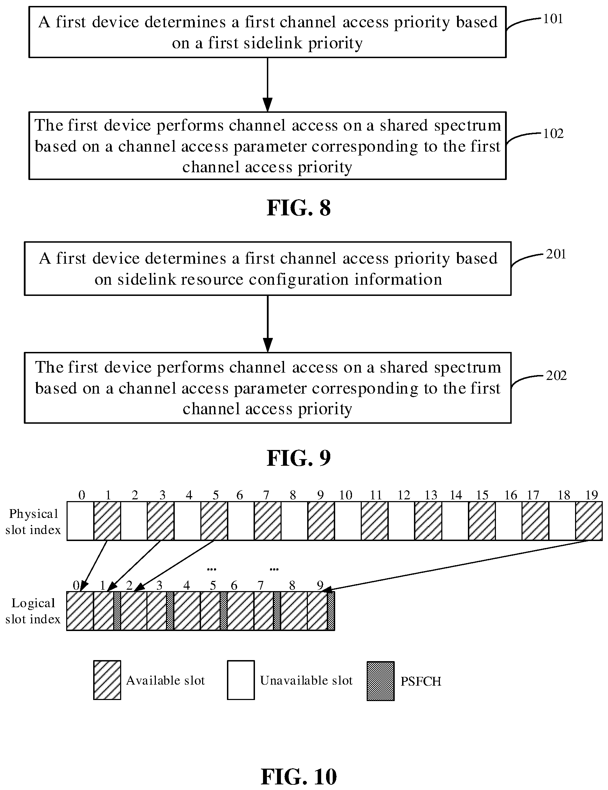

FIG. 8 is a first schematic flowchart of a method for channel access provided in an embodiment of the disclosure. The method for channel access provided by the embodiment is applicable to a first device. The first device is a device in a sidelink transmission system.

As illustrated in FIG. 8, the method for channel access includes the following operations.

At 101, the first device determines a first channel access priority based on a first sidelink priority.

At 102, the first device performs the channel access on a shared spectrum based on a channel access parameter corresponding to the first channel access priority.

In the embodiment, the first sidelink priority may be understood as a priority of a sidelink channel to be transmitted by the first device at present, and may also be understood as a priority of sidelink information to be transmitted by the first device at present. For example, the sidelink information to be transmitted includes a sidelink synchronization signal block (SSB). The sidelink SSB includes a sidelink primary synchronization signal, a sidelink secondary synchronization signal and a PSBCH.

In the embodiment, the first channel access priority is a channel access priority determined based on the first sidelink priority. In an embodiment, the channel access priority is shown in the above Table 1. The first device may obtain one or more channel access parameters corresponding to the first channel access priority based on Table 1. For example, the channel access parameters may include the number of backoff slots, a size of a contention window, a maximum channel occupancy time, etc. Then the first device may perform the channel access on the shared spectrum based on the determined channel access parameter(s). It should be understood that in the embodiment of the present disclosure, the channel access parameter(s) corresponding to the channel access priority is not limited to the correspondence as shown in Table 1.

In an optional embodiment of the disclosure, the first device determines the first channel access priority based on the first sidelink priority and first configuration information. The first configuration information includes a correspondence between a sidelink priority and a channel access priority. The first configuration information may be predefined, pre-configured, or network-configured information; or may be information sent by a second device to the first device; or may be determined by the first device. The embodiment of the present disclosure is not specifically limited thereto.

Exemplarily, the sidelink priority includes eight priority levels, and corresponding priority values are in a range of [1, 8] or [0, 7]. The priority value range [1, 8] includes the priority levels configured by high-level, and the priority value range [0, 7] includes the priority levels indicated in sidelink control information (SCI). There is a correspondence between the two priority level ranges, for example, the priority value indicated in the SCI is the priority value configured by the high-level minus 1. The embodiment of the disclosure does not limit determination of the two priority levels specifically, namely, the embodiment of the disclosure is applied to both value ranges of the priority levels.

For convenience of understanding, the priority value range [1, 8] is taken as an example in the following for illustration]

Since the sidelink priority levels include eight levels and the channel access priority levels include four priority levels (as shown in Table 1), the correspondence between the sidelink priority levels and the channel access priority levels may be determined by predefinition, pre-configuration or network configuration, which is shown in Table 2 or Table 3.

**Table 2**

| Sidelink priority (P_SL) | Channel access priority (p) |
|---|---|
| 1 | 1 |
| 2 | 1 |
| 3 | 2 |
| 4 | 2 |
| 5 | 3 |
| 6 | 3 |
| 7 | 4 |
| 8 | 4 |

**Table 3**

| Sidelink priority (P_SL) | Channel access priority (p) |
|---|---|
| 1 | 1 |
| 2 | 1 |
| 3 | 1 |
| 4 | 2 |
| 5 | 2 |
| 6 | 2 |
| 7 | 3 |
| 8 | 4 |

It should be noted that the correspondence shown in above Table 2 and Table 3 is only an example. The embodiments of the present disclosure do not specifically limit the correspondence between the sidelink priority and the channel access priority.

In an optional embodiment of the disclosure, the first device determines the first sidelink priority based on a priority of a first sidelink channel. The first sidelink channel is a channel to be transmitted after the first device successfully accesses the channel. For example, if the first device successfully accesses the channel, the first device transmits the first sidelink channel.

In an embodiment, the first sidelink channel includes one of a PSCCH, a PSSCH, a PSFCH, and a sidelink SSB.

Specifically, the first device may determine the first sidelink priority by means of one of the following manners.

In a possible implementation, if the first sidelink channel is a PSCCH, the first device determines the first sidelink priority based on priority information in SCI carried by the PSCCH. Specifically, the first device determines a priority in the SCI carried by the PSCCH as the first sidelink priority.

In a possible implementation, if the first sidelink channel is a PSSCH, the first device determines the first sidelink priority based on priority information carried in SCI scheduling the PSSCH. Specifically, the first device determines a priority carried in the SCI scheduling the PSSCH as the first sidelink priority.

In a possible implementation, if the first sidelink channel is a PSFCH, the first device determines the first sidelink priority based on a priority of a PSSCH corresponding to the PSFCH. Specifically, the first device determines a priority of the PSSCH corresponding to the PSFCH as the first sidelink priority. The PSSCH corresponding to the PSFCH represents that sidelink feedback information carried by the PSFCH is the sidelink feedback information of the PSSCH.

In a possible implementation, if the first sidelink channel is a sidelink SSB, the first device determines the first sidelink priority based on a priority of the sidelink SSB. The priority of the sidelink SSB is preconfigured or is configured by a network. Specifically, the first device determines the priority of the SSB preconfigured or configured by the network as the first sidelink priority.

As an example, when the first device is in a coverage of the network, the first device obtains system information, i.e., a system information block (SIB) 12 from the network side. The system information includes a parameter sl-SSB-PriorityNR for configuring the priority of the sidelink SSB, and the value range of the priority is [1, 8]. In the above example, the first device may determine the first sidelink priority based on the priority of the sidelink SSB configured by the network.

As an example, when the first device is out of the coverage of the network, the first device obtains pre-configured information SidelinkPreconfigNR, which includes the parameter sl-SSB-PriorityNR for configuring the priority of the sidelink SSB, and the value range of the priority is [1, 8].

In the method for channel access in the embodiments of the disclosure, the sidelink device determines the channel access priority corresponding to the first sidelink priority after obtaining the first sidelink priority, and performs the channel access on the shared spectrum based on the channel access parameter corresponding to the channel access priority. Due to the consideration of the sidelink priority, the above solution can improve the success rate of channel access by the sidelink device.

FIG. 9 is a second schematic flowchart of a method for channel access provided in an embodiment of the disclosure. The method for channel access provided by the embodiment is also applicable to a first device. The first device is a device in a sidelink transmission system.

As illustrated in FIG. 9, the method for channel access includes the following operations.

At 201, the first device determines a first channel access priority based on sidelink resource configuration information.

At 202, the first device performs the channel access on a shared spectrum based on a channel access parameter corresponding to the first channel access priority.

In the embodiment, the sidelink resource configuration information includes resource configuration of a PSFCH. The resource configuration of the PSFCH includes a period of the PSFCH, a minimum time interval between the PSFCH and a PSSCH corresponding to the PSFCH, and the like. As illustrated in FIG. 7, the period of the PSFCH is four slots, and the minimum time interval between the PSFCH and the PSSCH corresponding to the PSFCH is two slots.

In an optional embodiment of the disclosure, the first device determines the first channel access priority through the following operations.

At 2011, the first device determines a first time interval based on resource configuration of the PSFCH in the sidelink resource configuration information.

At 2012, the first device determines the first channel access priority based on the first time interval.

The first time interval is a minimum time interval between the PSFCH and a PSSCH corresponding to the PSFCH, and the PSFCH carries sidelink feedback information of the PSSCH. For example, in the resource configuration of the PSFCH illustrated in FIG. 7, the minimum time interval between the PSFCH and the PSSCH corresponding to the PSFCH is configured to be two slots.

In an optional embodiment of the disclosure, the operation that the first device determines the first channel access priority based on the first time interval includes the following operation. The first device determines the first channel access priority based on a first duration and second configuration information.

The first duration is a duration determined by the first device based on the first time interval. The second configuration information includes a correspondence between a maximum channel occupancy time and a channel access priority. The second configuration information is as shown in Table 1, and different channel access priorities correspond to different maximum channel occupancy time. For example, the maximum channel occupancy time corresponding to channel access priority 1 is 2 ms, and the maximum channel occupancy time corresponding to channel access priority 4 is 6 ms or 10 ms. The second configuration information may be predefined, pre-configured, or network-configured information; or may be information sent by the second device to the first device; and or may be determined by the first device. The embodiments of the present disclosure are not specifically limited thereto.

It should be understood that the minimum time interval between the PSFCH and the PSSCH corresponding to the PSFCH is generally expressed as the number of slots in a resource pool including the PSSCH (i.e., resource pool in which the PSSCH is located), while the maximum channel occupancy time is calculated according to physical time. Therefore, it is required to convert the number of logical slots in the resource pool corresponding to the first time interval into the corresponding physical time, that is, the above first duration.

FIG. 10 is a schematic diagram of sidelink resource configuration provided in an embodiment of the disclosure. FIG. 10 schematically illustrates that the system transmission resource includes twenty physical slots, i.e., slots 0 to 19. Available slots in the resource pool include odd slots in the twenty physical slots, i.e., the slots corresponding to the physical slot index 1/3/5/7/9/11/13/15/17/19. The ten slots belonging to the resource pool are renumbered, and have the corresponding logical slot index 0/1/2/3/4/5/6/7/8/9 in the resource pool. The period of PSFCH is two slots, a resource of the PSFCH is located in the logical slot 1/3/5/7/9, and the minimum time interval between the PSSCH and the PSFCH corresponding to PSSCH is two slots. For example, when UE1 transmits a PSSCH in logical slot 2, the PSFCH corresponding to the PSSCH is located in logical slot 5. The logical slot 2 corresponds to physical slot 5, and the logical slot 5 corresponds to physical slot 11, that is, there are six physical slots between the PSSCH and the PSFCH corresponding to the PSSCH. When a subcarrier spacing of the system is 15 kHz, one slot corresponds to 1 ms, so the time interval between the PSSCH and the PSFCH is 6 ms, that is, the first duration is 6 ms. The UE1 determines the channel access priority (i.e., the first channel access priority) corresponding to the first duration from the second configuration information based on the first duration. For example, according to Table 1, the maximum channel occupancy time corresponding to the channel access priority 3 or 4 is 6 ms, and the maximum channel occupancy time corresponding to the channel access priority 1 or 2 is less than 6 ms. Therefore, the UE1 determines to use a channel access parameter(s) corresponding to the channel access priority 3 or 4 corresponding to the first duration of 6 ms for channel access.

According to the method for channel access in the embodiments of the disclosure, the sidelink device determines the time interval between the PSSCH and the PSFCH corresponding to the PSSCH based on the sidelink resource configuration, further determines the channel access priority corresponding to the time interval, and performs the channel access on the shared spectrum based on the channel access parameter(s) corresponding to the channel access priority. The above solution can improve the success rate of channel access by the sidelink device.

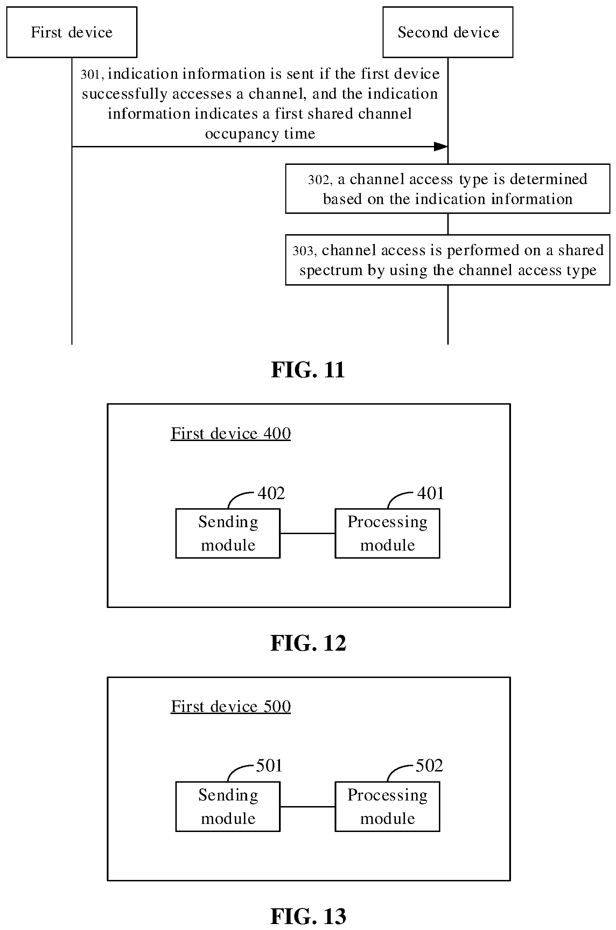

FIG. 11 is a schematic diagram of interaction of a method for channel access provided in an embodiment of the disclosure. The method for channel access provided by the embodiments involves an interaction process between a first device and a second device in a sidelink transmission system. As illustrated in FIG. 11, the method for channel access includes the following operations.

At 301, a first device sends indication information to a second device when the first device successfully accesses a channel. The indication information is configured for indicating a first shared channel occupancy time.

In an embodiment, the second device includes an opposite device in unicast communication with the first device, or another device belonging to a same communication group as the first device. If a device is a receiving end for receiving sidelink data from the first device, the device may share the shared channel occupancy time indicated by the first device. If a device is not the receiving end for receiving sidelink data from the first device, the device may not share the shared channel occupancy time indicated by the first device. Therefore, after the first device initiates channel sharing, the success rate of channel access by the opposite device of the first device can be improved, but the success rate of channel access by another device in the communication system (not the data receiving end for the first device) may be reduced. Therefore, the maximum channel occupancy time for the first device to share the channel may be appropriately limited.

In the embodiment, the first device may perform the channel access by using the methods for channel access provided in the above two embodiments, which is not specifically limited in the embodiment. In other words, the first device may determine the first channel access priority based on the first sidelink priority or the sidelink resource configuration information, and perform the channel access on the shared spectrum based on the channel access parameter(s) corresponding to the first channel access priority. The operation that the first device successfully accesses the channel may be understood as that the first device successfully accesses a channel corresponding to the shared spectrum, or the first device uses the channel or transmission resource of the shared spectrum for sidelink transmission.

It should be understood that the first device may perform the channel access by using other channel access methods, which is not specifically limited in the embodiments.

In the embodiment, the first device determines the first sidelink priority, and determines a first shared channel occupancy time based on the first sidelink priority. The first sidelink priority may be understood as a priority of a sidelink channel to be transmitted by the first device at present, and may also be understood as a priority of sidelink information to be transmitted by the first device at present. For example, the sidelink information to be transmitted includes a sidelink SSB.

In an embodiment, the first sidelink priority includes a priority corresponding to a first sidelink channel. The first sidelink channel includes any one of a PSCCH, a PSSCH, a PSFCH and a sidelink SSB. The manner that the first device determines the priority corresponding to the first sidelink channel may be referred to the above embodiments and will not be elaborated herein.

In an optional embodiment of the disclosure, the operation that the first device determines the first shared channel occupancy time based on the first sidelink priority includes the following action. The first device determines the first shared channel occupancy time based on the first sidelink priority, the first channel access priority and third configuration information. The manner that the first device determines the first channel access priority based on the first sidelink priority may be referred to the above embodiments and will not be elaborated herein.

In an embodiment, the third configuration information includes a correspondence among a channel access priority, a sidelink priority and a shared channel occupancy time. After determining the first sidelink priority and the first channel access priority, the first device may determine the first shared channel occupancy time corresponding to the first sidelink priority and the first channel access priority based on the third configuration information. As shown in Table 4, if the first channel access priority is p=2 and the first sidelink priority is P_SL=2, the first shared channel occupancy time determined according to Table 4 is 4 ms.

In an embodiment, the third configuration information includes a correspondence among a channel access priority, a sidelink priority and a maximum channel occupancy time. Correspondingly, after determining the first sidelink priority and the first channel access priority, the first device may determine a first maximum channel occupancy time corresponding to the first sidelink priority and the first channel access priority based on the third configuration information. As shown in Table 4, if the first channel access priority is p=2 and the first sidelink priority is P_SL=4, the first maximum channel occupancy time determined according to Table 4 is 3 ms.

It should be understood that the first shared channel occupancy time is less than or equal to the first maximum channel occupancy time. As shown in Table 4, if the first channel access priority is p=2 and the first sidelink priority is P_SL=4, the first maximum channel occupancy time determined according to Table 4 is 3 ms. Then, the first shared channel occupancy time indicated by the first device in the indication information may be less than or equal to 3 ms, for example, the first shared channel occupancy time is 2 ms.

In the embodiment, the third configuration information may be predefined, pre-configured, or network-configured information; or may be information sent by the second device to the first device; or may be determined by the first device. The embodiment of the present disclosure is not specifically limited thereto.

Exemplarily, Table 4 shows the correspondence among the channel access priority, the sidelink priority and the shared channel occupancy time or the maximum channel occupancy time.

**Table 4**

| Channel access priority (p) | Maximum channel occupancy time T_{mcot,p} corresponding to channel access priority | Sidelink priority (P_SL) | Shared channel occupancy time or maximum channel occupancy time |
|---|---|---|---|
| 1 | 2 ms | 1 ≤ P_SL ≤ 4 | 2 ms |
| | | 5 ≤ P_SL ≤ 8 | 1 ms |
| 2 | 4ms | 1 ≤ P_SL ≤ 2 | 4 ms |
| | | 3 ≤ P_SL ≤ 4 | 3 ms |
| | | 5 ≤ P_SL ≤ 6 | 2 ms |
| | | 7 ≤ P_SL ≤ 8 | 1 ms |
| 3 | 6 ms | 1 ≤ P_SL ≤ 2 | 6 ms |
| | | 3 ≤ P_SL ≤ 4 | 4 ms |
| | | 5 ≤ P_SL ≤ 6 | 2 ms |
| | | 7 ≤ P_SL ≤ 8 | 1 ms |
| 4 | 6 ms | 1 ≤ P_SL ≤ 2 | 6 ms |
| | | 3 ≤ P_SL ≤ 4 | 4ms |
| | | 5 ≤ P_SL ≤ 6 | 2 ms |
| | | 7 ≤ P_SL ≤ 8 | 1 ms |

In an embodiment, the shared channel occupancy time or maximum channel occupancy time is less than or equal to the maximum channel occupancy time T_{mcot,p} determined based on the channel access priority, as shown in Table 1 and Table 4.

It should be noted that the correspondence shown in Table 4 is only an example. The embodiments of the present disclosure do not specifically limit the correspondence among the channel access priority, the sidelink priority and the shared channel occupancy time or maximum channel occupancy time.

In an embodiment, the indication information may be carried in SCI, a media access control (MAC) control element (CE), proximity communication 5 (PC5) radio resource control (RRC) signaling or a PSFCH.

In an optional embodiment of the disclosure, the first device may send the first sidelink channel to the second device while sending the indication information to the second device, that is, the first sidelink channel and the indication information are sent in a same slot. The first sidelink channel is a channel to be transmitted after the first device successfully accesses the channel, for example, the first sidelink channel may be a PSCCH, and the indication information is carried in the SCI.

The first device sends the first sidelink channel to the second device after the first device successfully accesses the channel. Further, the first device sends the indication information to the second device. The first sidelink channel is a channel to be transmitted after the first device successfully accesses the channel. If the first sidelink channel is a PSSCH. The indication information is sent together with the first sidelink channel simultaneously, i.e., the indication information and the first sidelink channel are sent in the same slot, or may be sent after the first sidelink channel, i.e., the indication information and the first sidelink channel are sent in different slots.

The first device obtains a first parameter based on pre-configured information or network-configured information when the first device initiates channel sharing. The first parameter indicates the maximum channel occupancy time T₁ for channel sharing by the first device. Therefore, the first device determines the shared channel occupancy time T based on the first parameter, such that T is less than or equal to T₁.

In an embodiment, the first parameter is a parameter related to quality of service (Qos) parameters. The Qos parameters include a priority, reliability, a delay, a data rate, etc.

The priority indicates the priority carried in the SCI sent by the first device, and the higher the priority, the greater the T.

The reliability indicates the reliability of data transmission by the first device, and the higher the reliability, the greater the T.

The delay indicates the delay of data transmission by the first device, and the smaller the delay, the larger the T.

The data rate represents the rate for the first device to transmit data, and the greater the data rate, the greater the T.

At 302, the second device determines a channel access type based on the indication information.

In an optional embodiment of the disclosure, the operation that second device determines the channel access type based on the indication information includes the following. The second device determines the channel access type based on the first sidelink channel and the indication information from the first device.

In an embodiment, the second device determines the channel access type for sending a second sidelink channel on the shared spectrum based on the indication information from the first device and a time when the first sidelink channel is received.

If a transmission time of the second sidelink channel (a time when the second sidelink channel is sent) is within a time domain range corresponding to the first shared channel occupancy time indicated by the indication information, the second device performs the channel access by using a target channel access type.

If the transmission time of the second sidelink channel is outside the time domain range corresponding to the first shared channel occupancy time indicated by the indication information, the second device performs the channel access by using the first channel access type mentioned above (i.e., the channel access type type1).

The time domain range corresponding to the first shared channel occupancy time is determined by the second device based on the time when receiving the first sidelink channel and the first shared channel occupancy time.

In an embodiment, the first sidelink channel includes a PSSCH, the second sidelink channel includes a PSFCH corresponding to the PSSCH, and the PSFCH carries sidelink feedback information of the PSSCH. Correspondingly, the operation that the second device determines the channel access type based on the indication information and the PSSCH includes the following action. The second device determines the channel access type based on the first shared channel occupancy time indicated by the indication information and the time when the PSSCH is received.

In an embodiment, the first shared channel occupancy time is less than or equal to the first maximum channel occupancy time.

If the sidelink feedback is activated, the second device needs to send the PSFCH to the first device after receiving the PSSCH, and the PSFCH carries the sidelink feedback information of the PSSCH. When a transmission time of the PSFCH is within the time domain range corresponding to the first shared channel occupancy time, the second device performs the channel access by using the target channel access type and sends the PSFCH to the first device after the channel access is successful. The time domain range corresponding to the first shared channel occupancy time is determined by the second device based on the time when receiving the PSSCH and the first shared channel occupancy time.

In the embodiment, the operation that the second device performs the channel access by using the target channel access type represents that the second device determines whether to access a channel based on a sensing result by sensing the channel for a fixed duration, or the second device directly accesses a channel without sensing the channel. The fixed duration includes 25 microseconds or 16 microseconds. In other words, the operation that the second device performs the channel access by using the target channel access type represents that the second device performs the channel access by using the second channel access type mentioned above (including the channel access type type2A, type2B, or type2C).

At 303, the second device performs the channel access on a shared spectrum by using the channel access type.

As an example, when the first device sends a PSSCH to the second device and the sidelink feedback is activated, the second device needs to send a PSFCH to the first device after receiving the PSSCH. When the first device successfully accesses the channel by using the first channel access type, the first device may send to the second device indication information for indicating the shared channel occupation duration, such that the second device does not need to access the channel by using the first channel access type when the second device sends the PSFCH, but only needs to access the channel by using the second channel access type (including the channel access type type2A, type2B or type2C). Therefore, the success rate of channel access by the second device can be improved.

In order to ensure that a slot for sending the PSFCH by the second device is within a slot range corresponding to the channel occupancy time shared by the first device, the first device needs to determine the channel access priority based on the first time interval between the slot for sending the PSFCH by the second device and a slot for sending the PSSCH by the first device currently, so that the maximum channel occupancy time corresponding to the channel access priority is greater than or equal to the first time interval.

According to the method for channel access described in the embodiments of the disclosure, the first device may share the channel occupancy time with the second device by sending indication information to the second device after the first device successfully accesses the channel by using the first channel access type. The indication information indicates the first shared channel occupancy time. The first shared channel occupancy time is determined by the first device based on the sidelink priority and the channel access priority. The first shared channel occupancy time may be a maximum channel occupancy time corresponding to the sidelink priority and the channel access priority. The above solution can improve the success rate of the channel access by the second device.

The method for channel access provided by the embodiments of the present disclosure has been described in detail above, and a sidelink device provided in the embodiments of the present disclosure will be described below. The sidelink device includes a first device and a second device for direct communication.

FIG. 12 is a first schematic diagram of a structure of a first device provided in an embodiment of the disclosure. As illustrated in FIG. 12, a first device 400 provided in this embodiment includes a processing module 401 and a sending module 402.

The processing module 401 is configured to determine a first channel access priority based on a first sidelink priority or sidelink resource configuration information, and perform the channel access on a shared spectrum based on a channel access parameter corresponding to the first channel access priority.

In an optional embodiment of the disclosure, the processing module 401 is configured to determine the first channel access priority based on the first sidelink priority and first configuration information. The first configuration information includes a correspondence between a sidelink priority and a channel access priority.

In an optional embodiment of the disclosure, the processing module 401 is configured to determine the first sidelink priority based on a priority of a first sidelink channel. The first sidelink channel is a channel to be transmitted after the first device successfully accesses a channel.

In an embodiment, the first sidelink channel includes one of: a PSCCH; a PSSCH; a PSFCH; and a sidelink SSB. The sidelink SSB includes a sidelink primary synchronization signal, a sidelink secondary synchronization signal and a PSBCH.

In an optional embodiment of the disclosure, the processing module 401 is configured to, if the first sidelink channel is a PSCCH, determine the first sidelink priority based on priority information in SCI carried by the PSCCH.

In an optional embodiment of the disclosure, the processing module 401 is configured to, if the first sidelink channel is a PSSCH, determine the first sidelink priority based on priority information carried in SCI scheduling the PSSCH.

In an optional embodiment of the disclosure, the processing module 401 is configured to, if the first sidelink channel is a PSFCH, determine the first sidelink priority based on a priority of a PSSCH corresponding to the PSFCH.

In an optional embodiment of the disclosure, the processing module 401 is configured to, if the first sidelink channel is a sidelink SSB, determine the first sidelink priority based on a priority of the sidelink SSB. The priority of the sidelink SSB is preconfigured or is configured by a network.

In an embodiment, the sidelink resource configuration information includes a resource configuration of a PSFCH.

The processing module 401 is configured to determine a first time interval based on the resource configuration of the PSFCH, and determine the first channel access priority based on the first time interval.

The first time interval is a minimum time interval between the PSFCH and a PSSCH corresponding to the PSFCH, and the PSFCH carries sidelink feedback information of the PSSCH.

In an optional embodiment of the disclosure, the processing module 401 is configured to determine the first channel access priority based on a first duration and second configuration information.

The first duration is a duration determined based on the first time interval, and the second configuration information includes a correspondence between a maximum channel occupancy time and a channel access priority.

In an embodiment, a maximum channel occupancy time corresponding to the first channel access priority is greater than or equal to the first duration.

In an embodiment, the first duration represents a length of physical time.

In an optional embodiment of the disclosure, the sending module 402 is configured to send indication information to a second device if the first device successfully accesses a channel. The indication information is configured for indicating a first shared channel occupancy time.

In an embodiment, the indication information is carried in SCI, an MAC CE, or PC5 RRC signaling.

In an optional embodiment of the disclosure, the processing module 401 is configured to determine the first shared channel occupancy time based on the first sidelink priority or the sidelink resource configuration information.

In an optional embodiment of the disclosure, the processing module 401 is configured to determine the first shared channel occupancy time based on the first sidelink priority, the first channel access priority and third configuration information. The third configuration information includes a correspondence among a channel access priority, a sidelink priority and a shared channel occupancy time.

In an optional embodiment of the disclosure, the sending module 402 is configured to send a first sidelink channel to the second device. The first sidelink channel is a channel to be transmitted after the first device successfully accesses the channel.

The first device provided by the embodiment of the present disclosure is configured to perform the technical solution performed by the first device in the method embodiment illustrated in FIG. 8 or FIG. 9, and has the similar implementation principle and technical effect to the method embodiment, which will not be elaborated herein.

FIG. 13 is a second schematic diagram of a structure of a first device provided in an embodiment of the disclosure. As illustrated in FIG. 12, a first device 500 provided in this embodiment includes a sending module 501 and a processing module 502.

If the first device successfully accesses a channel on a shared spectrum based on a channel access parameter corresponding to a first channel access priority, the sending module 501 is configured to send a first sidelink channel and indication information to a second device. The indication information is configured for indicating a first shared channel occupancy time.

In an embodiment, the indication information is carried in SCI, an MAC CE, or PC5 RRC signaling.

In an optional embodiment of the disclosure, the processing module 502 is configured to determine the first shared channel occupancy time based on a first sidelink priority. The first sidelink priority includes a priority corresponding to the first sidelink channel.

In an optional embodiment of the disclosure, the processing module 502 is configured to determine the first shared channel occupancy time based on the first sidelink priority, the first channel access priority and third configuration information. The third configuration information includes a correspondence among a channel access priority, a sidelink priority and a shared channel occupancy time.

In an optional embodiment of the disclosure, the processing module 502 is configured to determine the first shared channel occupancy time based on sidelink resource configuration information. The sidelink resource configuration information includes a resource configuration of a physical sidelink feedback channel (PSFCH).

In an embodiment, the first sidelink channel includes one of: a PSCCH; a PSSCH; a PSFCH; and a sidelink SSB. The sidelink SSB includes a sidelink primary synchronization signal, a sidelink secondary synchronization signal and a PSBCH.

The first device provided by the embodiment of the present disclosure is configured to perform the technical solution performed by the first device in the method embodiment illustrated in FIG. 11, and has the similar implementation principle and technical effect to the method embodiment, which will not be elaborated herein.

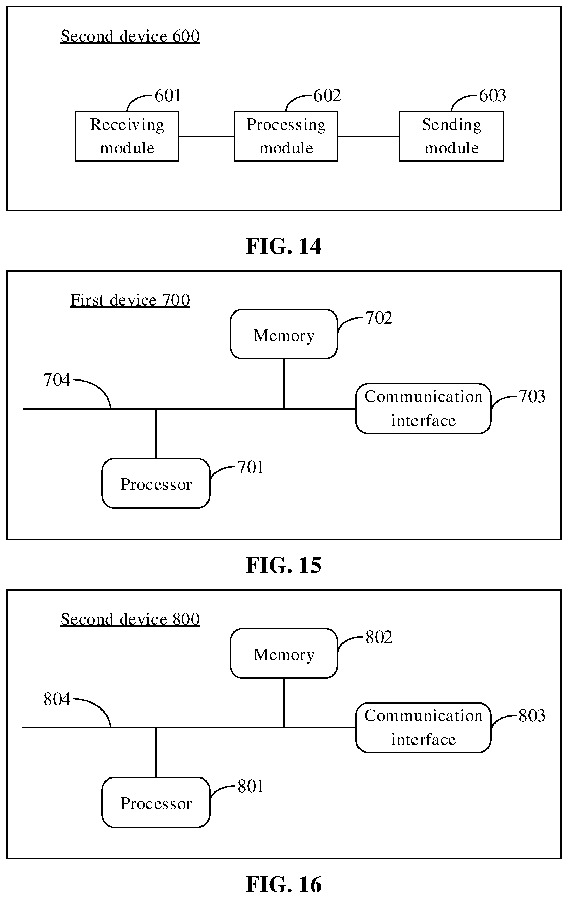

FIG. 14 is a schematic diagram of a structure of a second device provided in an embodiment of the disclosure. As illustrated in FIG. 14, a second device 600 provided in this embodiment includes a receiving module 601, a processing module 602 and a sending module 603.

The receiving module 601 is configured to receive a first sidelink channel and indication information from a first device. The indication information is configured for indicating a first shared channel occupancy time.

The processing module 602 is configured to determine a channel access type based on the indication information, and perform channel access on a shared spectrum by using the channel access type.

In an embodiment, the indication information is carried in SCI, an MAC CE, or PC5 RRC signaling.

In an embodiment, the first sidelink channel includes a PSSCH. The processing module 602 is configured to determine the channel access type based on a time when the PSSCH is received and the first shared channel occupancy time indicated by the indication information.

In an optional embodiment of the disclosure, the sending module 603 is configured to send a PSFCH to the first device. The PSFCH carries sidelink feedback information of the PSSCH.

In an optional embodiment of the disclosure, if a transmission time of the PSFCH is within a time domain range corresponding to the first shared channel occupancy time, the processing module 602 is configured to perform the channel access by using a target channel access type, and the sending module 603 is configured to send the PSFCH to the first device after the channel access is successful.

The time domain range is determined based on the time when the PSSCH is received and the first shared channel occupancy time. The target channel access type indicates that the second device determines whether to access a channel based on a sensing result by sensing the channel for a fixed duration, or the target channel access type indicates that the second device directly accesses a channel without sensing the channel.

In an embodiment, the fixed duration includes 25 microseconds or 16 microseconds.

The second device provided by the embodiment of the present disclosure is configured to perform the technical solution performed by the second device in the method embodiment illustrated in FIG. 11, and has the similar implementation principle and technical effect to the method embodiment, which will not be elaborated herein.

FIG. 15 is a schematic diagram of a hardware structure of a first device provided in an embodiment of the disclosure. As illustrated in FIG. 15, a first device 700 provided in this embodiment includes a processor 701, a memory 702 and a communication interface 703.

The memory 702 is configured to store a computer program. The processor 701 is configured to execute the computer program stored in the memory 702 to perform the method performed by the first device in any of the above method embodiments. The communication interface 703 is configured to perform data communication or signal communication with other devices.

In an embodiment, the memory 702 may be independent, and may also be integrated with the processor 701. When the memory 702 is a separate device from the processor 701, the electronic device 700 may further include a bus 704 for connecting the memory 702 and the processor 701.

In a possible implementation, the processing module 401 in FIG. 12 may be integrated in the processor 701, and the sending module 402 in FIG. 12 may be integrated in the communication interface 703.

In a possible implementation, the processing module 502 in FIG. 13 may be integrated in the processor 701, and the sending module 501 in FIG. 13 may be integrated in the communication interface 703.

The first device provided by the embodiment may be configured to perform the method performed by the first device in any of the above method embodiments, and has the similar implementation principle and technical effect to the method embodiments, which will not be elaborated herein.

FIG. 16 is a schematic diagram of a hardware structure of a second device provided in an embodiment of the disclosure. As illustrated in FIG. 16, a second device 800 provided in this embodiment includes a processor 801, a memory 802 and a communication interface 803.

The memory 802 is configured to store a computer program. The processor 801 is configured to execute the computer program stored in the memory 802 to perform the method performed by the second device in the above method embodiment illustrated in FIG. 11. The communication interface 803 is configured to perform data communication or signal communication with other devices.

In an embodiment, the memory 802 may be independent, and may also be integrated with the processor 801. When the memory 802 is a separate device from the processor 801, the electronic device 800 may further include a bus 804 for connecting the memory 802 and the processor 801.

In a possible implementation, the processing module 602 in FIG. 14 may be integrated in the processor 801, and the receiving module 601 and the sending module 603 in FIG. 14 may be integrated in the communication interface 803.

The second device provided by the embodiment is configured to perform the method performed by the second device in the method embodiment illustrated in FIG. 11, and has the similar implementation principle and technical effect to the method embodiment, which will not be elaborated herein.

An embodiment of the disclosure also provides a computer-readable storage medium for storing computer-executable instructions. The computer-executable instructions, when executed by a processor, perform the technical solution of the first device in any of the aforementioned method embodiments.

An embodiment of the disclosure also provides a computer program. The computer program, when executed by a processor, performs the technical solution of the first device in any of the aforementioned method embodiments.

An embodiment of the disclosure also provides a computer program product including program instructions. The program instructions are configured to implement the technical solution of the first device in any of the aforementioned method embodiments.

An embodiment of the disclosure also provides a chip including a processing module and a communication interface. The processing module may perform the technical solution of the first device in the aforementioned method embodiments. Further, the chip may include a storage module (e.g., a memory) for storing instructions. The processing module is configured to execute the instructions stored in the storage module, and execution of the instructions stored in the storage module causes the processing module to perform the technical solution of the first device in any of the aforementioned method embodiments.

An embodiment of the disclosure also provides a computer-readable storage medium storing computer-executable instructions. The computer-executable instructions, when executed by a processor, perform the technical solution of the second device in the method embodiment as illustrated in FIG. 11.

An embodiment of the disclosure also provides a computer program. The computer program, when executed by a processor, performs the technical solution of the second device in the method embodiment as illustrated in FIG. 11.

An embodiment of the disclosure also provides a computer program product including program instructions. The program instructions are configured to implement the technical solution of the second device in the method embodiment as illustrated in FIG. 11.

An embodiment of the disclosure also provides a chip including a processing module and a communication interface. The processing module may be configured to perform the technical solution of the second device in the method embodiment as illustrated in FIG. 11. Further, the chip may include a storage module (e.g., a memory) for storing instructions. The processing module is configured to execute the instructions stored in the storage module, and execution of the instructions stored in the storage module causes the processing module to perform the technical solution of the second device in the method embodiment as illustrated in FIG. 11.

It should be noted and understood that division of various modules of the first device or the second device is only a logical function division, the modules may be completely or partially integrated into a physical entity or physically separated in actual implementations. In addition, these modules may all be realized by calling software through processing elements or be realized in the form of hardware, or some modules may beimplemented by calling software through processing elements and some modules may be implemented in the form of hardware. For example, the processing module may be an separate processing element, or may be integrated in a chip of the above device, or may be stored in the memory of the device in the form of program code and may be called and executed by the processing element of the device to implement the function of the determination module. The implementation of other modules is similar to the processing module. In addition, all or part of these modules may be integrated or implemented independently. The processing element may be an integrated circuit that has a signal processing capability. During implementation, the operations of the foregoing method or the various modules may be completed via an integrated logic circuit of hardware in the processor element or an instruction in a software form.

For example, the above modules may be one or more integrated circuits configured to implement the above methods, such as one or more application specific integrated circuits (ASICs), or one or more microprocessors (digital signal processors, DSPs), or one or more field programmable gate arrays (FPGAs), etc. As another example, when a module is implemented in the form of calling program codes by a processing element, the processing element may be a general-purpose processor, such as a central processing unit (CPU) or other processors that may call the program codes. For another example, these modules maybe integrated and implemented in the form of system-on-a-chip (SOC).

The above embodiments may be implemented in whole or in part by software, hardware, firmware or any combination thereof. When implemented in the form of software, the embodiments may be implemented in whole or in part in the form of a computer program product. The computer program product includes one or more computer instructions. When the computer program instructions are loaded and executed on a computer, all or part of the processes or functions described in accordance with embodiments of the present disclosure are generated. The computer may be a general-purpose computer, a dedicated computer, a computer network, or other programmable devices. The computer instructions may be stored in a computer-readable storage medium or transmitted from a computer-readable storage medium to another computer-readable storage medium. For example, the computer instructions may be transmitted from a Web site, a computer, a server, or a data center to another Web site, computer, server, or data center through a wired (e.g., coaxial cable, optical fiber, digital subscriber line (DSL)) or wireless (e.g., infrared, wireless, microwave, etc.) form. The computer-readable storage medium may be any available medium accessible to a computer, or a data storage device such as a server, a data center, or the like that integrated with one or more available mediums. The available medium may be a magnetic medium (e.g., floppy disk, hard disk, magnetic tape), optical medium (e.g., digital versatile disc (DVD)), or semiconductor medium (e.g., solid state disk (SSD)), etc.

In this disclosure, the phrase "at least two" means two or more objects, and "multiple" means two or more than two objects. The term "and/or" refers to an association relationship for describing the associated objects, and represents that three relationships may exist. For example, A and/or B may represent the following three cases: independent existence of A, existence of both A and B and independent existence of B. A and B may be singular or plural. In addition, character "/" in the disclosure usually represents that previous and next associated objects form an "or" relationship. In a formula, the character "/" indicates that previous and next associated objects form a "division" relationship. The expression "at least one of the following" or the similar expression refers to any combination of the listed items, including any combination of a single item or plural items. For example, at least one of a, b or c may represent: a, b, c, a-b, a-c, b-c, or a-b-c. a, b, c may be singular or plural.

It is to be understood that the various numerical numbers involved in the embodiments of the present disclosure are for the convenience of description only and are not intended to limit the scope of the embodiments of the present disclosure.

It should be understood that in embodiments of the disclosure, the size of the sequence number of each process does not mean the execution order, and the execution order of each process should be determined by its function and inherent logic.

## Claims

1. A method for channel access for a first device, the method comprising:
determining (101, 201) a first channel access priority based on a first sidelink priority or sidelink resource configuration information;
performing (102, 202) the channel access on a shared spectrum based on a channel access parameter corresponding to the first channel access priority;
sending indication information and a first sidelink channel to a second device when the first device successfully accesses a channel, wherein the first sidelink channel is a channel to be transmitted after the first device successfully accesses the channel, and the indication information indicates a first shared channel occupancy time;
wherein the method further comprises:
determining the first sidelink priority based on a priority of the first sidelink channel, wherein the determining comprises:
if the first sidelink channel is a physical sidelink shared channel, PSSCH, determining the first sidelink priority based on priority information carried in SCI scheduling the PSSCH.

2. The method of claim 1, wherein determining (101) the first channel access priority based on the first sidelink priority comprises:
determining the first channel access priority based on the first sidelink priority and first configuration information, the first configuration information comprising a correspondence between a sidelink priority and a channel access priority.

3. The method of claim 1, wherein the first sidelink channel further comprises one of:
a physical sidelink control channel, PSCCH;
a physical sidelink feedback channel, PSFCH; and
a sidelink synchronization signal block, SSB, wherein the sidelink SSB comprises a sidelink primary synchronization signal, a sidelink secondary synchronization signal and a physical sidelink broadcast channel, PSBCH.

4. The method of claim 1, wherein the indication information is carried in SCI, a media access control, MAC, control element, CE, or proximity communication 5, PC5, radio resource control, RRC, signaling.

5. A method for channel for a second device comprising:
receiving a first sidelink channel and indication information from a first device, the indication information indicating a first shared channel occupancy time, the first sidelink channel being a channel to be transmitted after the first device successfully accesses a channel;
determining (302) a channel access type based on the indication information; and
performing (303) the channel access on a shared spectrum by using the channel access type;
wherein the first sidelink channel is a physical sidelink shared channel, PSSCH, determining (302) the channel access type based on the indication information comprises:
determining the channel access type based on a time when the PSSCH is received and the first shared channel occupancy time indicated by the indication information.

6. The method of claim 5, wherein the indication information is carried in sidelink channel information, SCI, a media access control, MAC, control element, CE, or proximity communication 5, PC5, radio resource control, RRC, signaling.

7. The method of claim 5, further comprising:
sending a physical sidelink feedback channel, PSFCH, to the first device, wherein the PSFCH carries sidelink feedback information of the PSSCH.

8. The method of claim 7, wherein sending the PSFCH to the first device comprises:
if a transmission time of the PSFCH is within a time domain range corresponding to the first shared channel occupancy time, performing the channel access by using a target channel access type, and sending the PSFCH to the first device after the channel access is successful, wherein
the time domain range is determined based on the time when the PSSCH is received and the first shared channel occupancy time, and the target channel access type indicates that the second device determines whether to access a channel based on a sensing result by sensing the channel for a fixed duration, or the target channel access type indicates that the second device directly accesses a channel without sensing the channel.

9. A first device (400), comprising:
a processing module (401), configured to determine a first channel access priority based on a first sidelink priority or sidelink resource configuration information, and perform channel access on a shared spectrum based on a channel access parameter corresponding to the first channel access priority;
a sending module (402), configured to send indication information and a first sidelink channel to a second device when the first device successfully accesses a channel, wherein the first sidelink channel is a channel to be transmitted after the first device successfully accesses the channel, and the indication information indicates a first shared channel occupancy time;
wherein the processing module (401) is configured to determine, if the first sidelink channel is a physical sidelink shared channel, PSSCH, the first sidelink priority based on priority information in sidelink control information, SCI, carried by the PSCCH.

10. A second device (600) comprising:
a receiving module (601), configured to receive a first sidelink channel and indication information from a first device, the indication information indicating a first shared channel occupancy time, the first sidelink channel being a channel to be transmitted after the first device successfully accesses a channel; and
a processing module (602), configured to determine a channel access type based on the indication information, and perform channel access on a shared spectrum by using the channel access type;
wherein the first sidelink channel comprises a physical sidelink shared channel, PSSCH, and the processing module (602) is configured to:
determine the channel access type based on a time when the PSSCH is received and the first shared channel occupancy time indicated by the indication information.

11. A computer storage medium, configured to store a computer program which, when run on a computer, causes the computer to perform the method according to any one of claims 1 to 4.

12. A computer storage medium, configured to store a computer program which, when run on a computer, causes the computer to perform the method according to any one of claims 5 to 8.

## Patentansprüche

1. Verfahren zum Kanalzugriff für eine erste Vorrichtung, wobei das Verfahren Folgendes umfasst:
Bestimmen (101, 201) einer ersten Kanalzugriffspriorität auf der Grundlage einer ersten Sidelink-Priorität oder von Sidelink-Ressourcenkonfigurationsinformationen;
Durchführen (102, 202) des Kanalzugriffs auf einem gemeinsam genutzten Spektrum auf der Grundlage eines Kanalzugriffsparameters, der der ersten Kanalzugriffspriorität entspricht;
Senden von Anzeigeinformationen und eines ersten Sidelink-Kanals an eine zweite Vorrichtung, wenn die erste Vorrichtung erfolgreich auf einen Kanal zugreift, wobei der erste Sidelink-Kanal ein Kanal ist, der zu übertragen ist, nachdem die erste Vorrichtung erfolgreich auf den Kanal zugreift, und die Anzeigeinformationen eine erste gemeinsam genutzte Kanalbelegungszeit anzeigen;
wobei das Verfahren ferner Folgendes umfasst:
Bestimmen der ersten Sidelink-Priorität basierend auf einer Priorität des ersten Sidelink-Kanals, wobei das Bestimmen Folgendes umfasst:
wenn der erste Sidelink-Kanal ein gemeinsam genutzter physikalischer Sidelink-Kanal (PSSCH) ist, Bestimmen der ersten Sidelink-Priorität auf der Grundlage von Prioritätsinformationen, die in der SCI-Planung des PSSCH enthalten sind.

2. Verfahren nach Anspruch 1, wobei das Bestimmen (101) der ersten Kanalzugriffspriorität basierend auf der ersten Sidelink-Priorität Folgendes umfasst:
Bestimmen der ersten Kanalzugriffspriorität auf der Grundlage der ersten Sidelink-Priorität und erster Konfigurationsinformationen, wobei die ersten Konfigurationsinformationen eine Entsprechung zwischen einer Sidelink-Priorität und einer Kanalzugriffspriorität umfassen.

3. Verfahren nach Anspruch 1, wobei der erste Sidelink-Kanal außerdem eines der folgenden Elemente umfasst:
einen physikalischen Sidelink-Steuerkanal (PSCCH);
einen physikalischen Sidelink-Feedback-Kanal (PSFCH); und
einen Sidelink-Synchronisationssignalblock (SSB), wobei der Sidelink-SSB ein Sidelink-Primärsynchronisationssignal, ein Sidelink-Sekundärsynchronisationssignal und einen physikalischen Sidelink-Rundfunkkanal (PSBCH) umfasst.

4. Verfahren nach Anspruch 1, wobei die Anzeigeinformationen in der SCI, einem Medienzugriffssteuerung-(MAC)-Steuerelement (CE) oder einer Proximity Communication 5-(PC5)-Funkressourcensteuerung-(RRC)-Signalisierung übertragen werden.

5. Verfahren für einen Kanal für eine zweite Vorrichtung, das Folgendes umfasst:
Empfangen eines ersten Sidelink-Kanals und von Anzeigeinformationen von einer ersten Vorrichtung, wobei die Anzeigeinformationen eine erste gemeinsame Kanalbelegungszeit angeben, wobei der erste Sidelink-Kanal ein Kanal ist, der nach dem erfolgreichen Zugriff der ersten Vorrichtung auf einen Kanal zu übertragen ist;
Bestimmen (302) eines Kanalzugriffstyps auf der Grundlage der Anzeigeinformationen; und
Durchführen (303) des Kanalzugriffs auf ein gemeinsam genutztes Spektrum unter Verwendung des Kanalzugriffstyps;
wobei der erste Sidelink-Kanal ein gemeinsam genutzter physikalischer Sidelink-Kanal (PSSCH) ist, das Bestimmen (302) des Kanalzugriffstyps auf der Grundlage der Anzeigeinformationen Folgendes umfasst:
Bestimmen des Kanalzugriffstyps auf der Grundlage eines Zeitpunkts, zu dem der PSSCH empfangen wird, und der ersten gemeinsam genutzten Kanalbelegungszeit, die durch die Anzeigeinformationen angegeben wird.

6. Verfahren nach Anspruch 5, wobei die Anzeigeinformationen in einer Sidelink-Kanalinformation (SCI), einem Medienzugriffssteuerung- (MAC) - Steuerelement-(CE) oder einer Proximity Communication 5-(PC5)-Funkressourcensteuerung-(RRC)-Signalisierung enthalten ist.

7. Verfahren nach Anspruch 5, das ferner Folgendes umfasst:
Senden eines physikalischen Sidelink-Feedback-Kanals (PSFCH) an die erste Vorrichtung, wobei der PSFCH Sidelink-Feedback-Informationen des PSSCH trägt.

8. Verfahren nach Anspruch 7, wobei das Senden des PSFCH an die erste Vorrichtung Folgendes umfasst:
wenn eine Übertragungszeit des PSFCH innerhalb eines Zeitbereichs liegt, der der ersten gemeinsam genutzten Kanalbelegungszeit entspricht, Durchführen des Kanalzugriffs unter Verwendung eines Zielkanalzugriffstyps und Senden des PSFCH an die erste Vorrichtung, nachdem der Kanalzugriff erfolgreich ist, wobei
der Zeitdomänenbereich auf der Grundlage der Zeit, zu der der PSSCH empfangen wird, und der ersten gemeinsam genutzten Kanalbelegungszeit bestimmt wird, und der Zielkanalzugriffstyp anzeigt, dass die zweite Vorrichtung auf der Grundlage eines Erfassungsergebnisses bestimmt, ob auf einen Kanal zugegriffen werden soll, indem der Kanal für eine feste Dauer erfasst wird, oder der Zielkanalzugriffstyp anzeigt, dass die zweite Vorrichtung direkt auf einen Kanal zugreift, ohne den Kanal zu erfassen.

9. Erste Vorrichtung (400), die Folgendes umfasst:
ein Verarbeitungsmodul (401), das so ausgebildet ist, dass es eine erste Kanalzugriffspriorität auf der Grundlage einer ersten Sidelink-Priorität oder von Sidelink-Ressourcenkonfigurationsinformationen bestimmt und einen Kanalzugriff auf einem gemeinsam genutzten Spektrum auf der Grundlage eines Kanalzugriffsparameters durchführt, der der ersten Kanalzugriffspriorität entspricht;
ein Sendemodul (402), das so ausgebildet ist, dass es Anzeigeinformationen und einen ersten Sidelink-Kanal an eine zweite Vorrichtung sendet, wenn die erste Vorrichtung erfolgreich auf einen Kanal zugreift, wobei der erste Sidelink-Kanal ein Kanal ist, der zu übertragen ist, nachdem die erste Vorrichtung erfolgreich auf den Kanal zugreift, und die Anzeigeinformationen eine erste gemeinsame Kanalbelegungszeit angeben;
wobei das Verarbeitungsmodul (401) so ausgebildet ist, dass es, wenn der erste Sidelink-Kanal ein gemeinsam genutzter physikalischer Sidelink-Kanal (PSSCH) ist, die erste Sidelink-Priorität auf der Grundlage von Prioritätsinformationen in Sidelink-Steuerinformationen (SCI), die vom PSCCH übertragen werden, bestimmt.

10. Zweite Vorrichtung (600), die Folgendes umfasst:
ein Empfangsmodul (601), das so ausgebildet ist, dass es einen ersten Sidelink-Kanal und Anzeigeinformationen von einer ersten Vorrichtung empfängt, wobei die Anzeigeinformationen eine erste gemeinsam genutzte Kanalbelegungszeit anzeigen, wobei der erste Sidelink-Kanal ein Kanal ist, der zu übertragen ist, nachdem die erste Vorrichtung erfolgreich auf einen Kanal zugreift; und
ein Verarbeitungsmodul (602), das so ausgebildet ist, dass es einen Kanalzugriffstyp auf der Grundlage der Anzeigeinformationen bestimmt und einen Kanalzugriff auf einem gemeinsam genutzten Spektrum unter Verwendung des Kanalzugriffstyps durchführt;
wobei der erste Sidelink-Kanal einen gemeinsam genutzten physikalischen Sidelink-Kanal (PSSCH) umfasst und das Verarbeitungsmodul (602) für Folgendes ausgebildet ist:
Bestimmen des Kanalzugriffstyps auf der Grundlage eines Zeitpunkts, zu dem der PSSCH empfangen wird, und der ersten gemeinsamen Kanalbelegungszeit, die durch die Anzeigeinformationen angegeben wird.

11. Computerspeichermedium, das so ausgebildet ist, dass es ein Computerprogramm speichert, das, wenn es auf einem Computer ausgeführt wird, den Computer veranlasst, das Verfahren nach einem der Ansprüche 1 bis 4 durchzuführen.

12. Computerspeichermedium, das so ausgebildet ist, dass es ein Computerprogramm speichert, das, wenn es auf einem Computer ausgeführt wird, den Computer veranlasst, das Verfahren nach einem der Ansprüche 5 bis 8 durchzuführen.

## Revendications

1. Procédé d'accès à un canal pour un premier dispositif, le procédé comprenant les étapes consistant à :
déterminer (101, 201) une première priorité d'accès à un canal sur la base d'une première priorité de liaison latérale ou d'une information de configuration de ressource de liaison latérale ;
effectuer (102, 202) l'accès au canal sur un spectre partagé sur la base d'un paramètre d'accès à un canal correspondant à la première priorité d'accès à un canal ;
envoyer une information d'indication et un premier canal de liaison latérale à un deuxième dispositif lorsque le premier dispositif accède correctement à un canal, le premier canal de liaison latérale étant un canal à transmettre après que le premier dispositif a accédé correctement au canal, et l'information d'indication indiquant un premier temps d'occupation de canal partagé ;
le procédé comprenant également l'étape consistant à :
déterminer la première priorité de liaison latérale sur la base d'une priorité du premier canal de liaison latérale, la détermination consistant à :
si le premier canal de liaison latérale est un canal partagé de liaison latérale physique, PSSCH, déterminer la première priorité de liaison latérale sur la base d'une information de priorité transportée dans une SCI planifiant le PSSCH.

2. Procédé selon la revendication 1, dans lequel la détermination (101) de la première priorité d'accès à un canal sur la base de la première priorité de liaison latérale consiste à :
déterminer la première priorité d'accès à un canal sur la base de la première priorité de liaison latérale et d'une première information de configuration, la première information de configuration comprenant une correspondance entre une priorité de liaison latérale et une priorité d'accès à un canal.

3. Procédé selon la revendication 1, dans lequel le premier canal de liaison latérale comprend également l'un des éléments suivants :
un canal de commande de liaison latérale physique, PSCCH ;
un canal de rétroaction de liaison latérale physique, PSFCH ; et
un bloc de signaux de synchronisation, SSB, de liaison latérale, le SSB de liaison latérale comprenant un signal de synchronisation primaire de liaison latérale, un signal de synchronisation secondaire de liaison latérale et un canal de diffusion de liaison latérale physique, PSBCH.

4. Procédé selon la revendication 1, dans lequel l'information d'indication est transportée dans une SCI, un élément de commande, CE, de commande d'accès au support, MAC, ou une signalisation de commande de ressource radio, RRC, de communication de proximité 5, PC5.

5. Procédé de canal pour un deuxième dispositif, comprenant les étapes consistant à :
recevoir un premier canal de liaison latérale et une information d'indication provenant d'un premier dispositif, l'information d'indication indiquant un premier temps d'occupation de canal partagé, le premier canal de liaison latérale étant un canal à transmettre après que le premier dispositif a accédé correctement à un canal ;
déterminer (302) un type d'accès à un canal sur la base de l'information d'indication ; et
effectuer (303) l'accès au canal sur un spectre partagé en utilisant le type d'accès à un canal ;
dans lequel le premier canal de liaison latérale est un canal partagé de liaison latérale physique, PSSCH, et la détermination (302) du type d'accès à un canal sur la base de l'information d'indication consiste à :
déterminer le type d'accès à un canal sur la base d'un instant auquel le PSCCH est reçu et du premier temps d'occupation de canal partagé indiqué par l'information d'indication.

6. Procédé selon la revendication 5, dans lequel l'information d'indication est transportée dans une information de canal de liaison latérale, SCI, un élément de commande, CE, de commande d'accès au support, MAC, ou une signalisation de commande de ressource radio, RRC, de communication de proximité 5, PC5.

7. Procédé selon la revendication 5, comprenant également l'étape consistant à :
envoyer un canal de rétroaction de liaison latérale physique, PSFCH, au premier dispositif, le PSFCH transportant une information de rétroaction de liaison latérale du PSSCH.

8. Procédé selon la revendication 7, dans lequel l'envoi du PSFCH au premier dispositif comprend les étapes consistant à :
si un temps de transmission du PSFCH se trouve à l'intérieur d'une plage de domaine temporel correspondant au premier temps d'occupation de canal partagé, effectuer l'accès au canal en utilisant un type d'accès à un canal cible, et envoyer le PSFCH au premier dispositif après que l'accès au canal a réussi, dans lequel
la plage de domaine temporel est déterminée sur la base de l'instant auquel le PSSCH est reçu et du premier temps d'occupation de canal partagé, et le type d'accès à un canal cible indique que le deuxième dispositif détermine s'il faut accéder à un canal sur la base d'un résultat de détection obtenu en détectant le canal pendant une durée fixe, ou le type d'accès à un canal cible indique que le deuxième dispositif accède directement à un canal sans détecter le canal.

9. Premier dispositif (400), comprenant :
un module de traitement (401), configuré pour déterminer une première priorité d'accès à un canal sur la base d'une première priorité de liaison latérale ou d'une information de configuration de ressource de liaison latérale, et effectuer l'accès au canal sur un spectre partagé sur la base d'un paramètre d'accès à un canal correspondant à la première priorité d'accès à un canal ;
un module d'envoi (402), configuré pour envoyer une information d'indication et un premier canal de liaison latérale à un deuxième dispositif lorsque le premier dispositif accède correctement à un canal, le premier canal de liaison latérale étant un canal à transmettre après que le premier dispositif a accédé correctement au canal, et l'information d'indication indiquant un premier temps d'occupation de canal partagé ;
dans lequel le module de traitement (401) est configuré pour déterminer, si le premier canal de liaison latérale est un canal partagé de liaison latérale physique, PSSCH, la première priorité de liaison latérale sur la base d'une information de priorité située dans une information de commande de liaison latérale, SCI, transportée par le PSCCH.

10. Deuxième dispositif (600) comprenant :
un module de réception (601), configuré pour recevoir un premier canal de liaison latérale et une information d'indication provenant d'un premier dispositif, l'information d'indication indiquant un premier temps d'occupation de canal partagé, le premier canal de liaison latérale étant un canal à transmettre après que le premier dispositif a accédé correctement à un canal ; et
un module de traitement (602), configuré pour déterminer un type d'accès à un canal sur la base de l'information d'indication, et effectuer un accès au canal sur un spectre partagé en utilisant le type d'accès à un canal ;
dans lequel le premier canal de liaison latérale comprend un canal partagé de liaison latérale physique, PSSCH, et le module de traitement (602) est configuré pour :
déterminer le type d'accès à un canal sur la base d'un instant auquel le PSSCH est reçu et du premier temps d'occupation de canal partagé indiqué par l'information d'indication.

11. Support de stockage informatique, configuré pour stocker un programme informatique qui, lorsqu'il est exécuté sur un ordinateur, amène l'ordinateur à réaliser le procédé selon l'une quelconque des revendications 1 à 4.

12. Support de stockage informatique, configuré pour stocker un programme informatique qui, lorsqu'il est exécuté sur un ordinateur, amène l'ordinateur à réaliser le procédé selon l'une quelconque des revendications 5 à 8.
